# EUROPEAN PATENT SPECIFICATION

(11) **EP 3 583 751 B1**
(45) Date of publication and mention of the grant of the patent: **30.11.2022**
(21) Application number: 18702711.5
(22) Date of filing: 06.02.2018
(51) Int. Cl.: H04L 45/00, H04L 45/48, H04L 45/02, H04L 49/15

(54) **METHOD FOR AN IMPROVED DEPLOYMENT AND USE OF NETWORK NODES OF A SWITCHING FABRIC OF A DATA CENTER OR WITHIN A CENTRAL OFFICE POINT OF DELIVERY OF A BROADBAND ACCESS NETWORK OF A TELECOMMUNICATIONS NETWORK**
VERFAHREN FÜR VERBESSERTE IMPLEMENTIERUNG UND VERWENDUNG VON NETZWERKKNOTEN EINES SWITCHING-FABRIC EINES DATENZENTRUMS ODER AN EINEM ZENTRALEN ÜBERGABEPUNKT EINES BREITBANDZUGANGSNETZWERKS EINES TELEKOMMUNIKATIONSNETZWERKS
PROCÉDÉ POUR AMÉLIORER LE DÉPLOIEMENT ET L'UTILISATION DE NOEUDS DE RÉSEAU D'UNE MATRICE DE COMMUTATION D'UN CENTRE DE DONNÉES OU À L'INTÉRIEUR D'UN POINT DE LIVRAISON DE BUREAU CENTRAL D'UN RÉSEAU D'ACCÈS LARGE BANDE D'UN RÉSEAU DE TÉLÉCOMMUNICATIONS

(30) Priority: 15.02.2017 EP 17156254
(43) Date of publication of application: 25.12.2019
(73) Proprietor: Deutsche Telekom AG, 53113 Bonn (DE)
(72) Inventor: HAAG, Thomas, 63110 Rodgau (DE); KOLBE, Hans-Jörg, 64295 Darmstadt (DE); MICHEL, Carsten, 65239 Hochheim (DE)
(74) Representative: Schwöbel, Thilo K.
(86) International application number: PCT/EP2018/052970
(87) International publication number: WO 2018/149701

(56) References cited:
- US-A1- 2007 233 887
- US-A1- 2014 101 336
- US-A1- 2014 181 292

## Description

### BACKGROUND

The present invention relates a method for an improved deployment and use of network nodes of a switching fabric of a data center or within a central office point of delivery of a broadband access network of a telecommunications network, wherein the switching fabric comprises a plurality of spine network nodes and a plurality of leaf network nodes.

Furthermore, the present invention relates to a telecommunications network for an improved deployment and use of network nodes of a switching fabric of a data center or within a central office point of delivery of a broadband access network of the telecommunications network, wherein the switching fabric comprises a plurality of spine network nodes and a plurality of leaf network nodes.

Additionally, the present invention relates to a switching fabric of a data center or within a central office point of delivery of a broadband access network for an improved deployment and use of network nodes of the switching fabric, wherein the switching fabric comprises a plurality of spine network nodes and a plurality of leaf network nodes.

Additionally, the present invention relates to a system for an improved deployment and use of network nodes of a switching fabric of a data center or within a central office point of delivery of a broadband access network of the telecommunications network, the system comprising a switching fabric, especially in a broadband access network, wherein the switching fabric comprises a plurality of spine network nodes and a plurality of leaf network nodes.

Furthermore, the present invention relates to a program and a computer program product for an improved deployment and use of network nodes of a switching fabric of a data center of within a central office point of delivery of a broadband access network of the telecommunications network.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

The present invention generally relates to the area of data centers or to the area of aggregation networks linking remote or central access nodes to the edge of a backbone network or core network of the telecommunications network. Example systems in the area are disclosed in US 2014/0181292 A1, US 20214/0101336 A1 and US 2007/0233887 A1.

It is a requirement to enhance the scalability, flexibility and manageability in data centers, especially by using layer-2 and layer-3 tunneling technologies such as VxLAN, MPLS Layer-2 VPNs, MPLS EVPN, or the like.

The different layers mentioned in the context of the present invention refer to the different layers of the OSI model (Open Systems Interconnection model), mainly layer 2 (data link layer), and layer 3 (network layer). The data link layer provides node-to-node data transfer such as a link between two directly connected nodes. It detects and possibly corrects errors that may occur in the physical layer. Among other things, it defines the protocol to establish and terminate a connection between two devices being physically connected, either directly or indirectly. It also defines the protocol for flow control between them. The network layer provides the functional and procedural means of transferring variable length data sequences (called datagrams or data packets) from one network node to another.

### SUMMARY

An object of the present invention is to provide a technically simple, effective and cost effective solution for an improved deployment and use of network nodes of a switching fabric of a data center or within a central office point of delivery of a broadband access network, wherein the switching fabric comprises a plurality of spine network nodes and a plurality of leaf network nodes. A further object of the present invention is to provide a corresponding telecommunications network, a corresponding switching fabric, and a corresponding system comprising a switching fabric.

The object of the present invention is achieved by a method according to claim 1.

It is thereby advantageously possible according to the present invention to provide an architecture of the switching fabric with an autoprovisioning functionality, wherein the switching fabric comprising spine network nodes as well as leaf network nodes in order to connect the plurality of remote network nodes either to the service edge nodes or to the edge nodes, typically label edge nodes.

Especially, it is advantageously possible according to the present invention, to overcome the limitations in scalability, flexibility and manageability in traditional data centers by means of separating the physical networks and the logical network from each other. The physical part of the data center is called the underlay network while the logical part of the data center is called overlay network and is implemented using layer-2 and layer-3 tunneling technologies, especially using VxLAN, MPLS (Multiprotocol Label Switching) Layer-2 VPNs (Virtual Private Networks), MPLS EVPN, etc. In the context of the present invention, only the underlay of the data center is considered. The basic design principles are known from the RFC7938-document (available under https://tools.ietf.org/html/rfc7938). The data center fabric is divided into two parts: spine switches and leaf switches. The leaf switches are redundantly connected to spine switches. In order to simplify operation and management of this data center fabric and to allow large-scale deployment, the data center underlay routing uses eBGP as its only routing protocol. Thereby, each one of the plurality of spine network nodes is connected with each one of the plurality of leaf network nodes.

According to the present invention, the telecommunications network furthermore comprises a plurality of edge nodes such that each one of the plurality of spine network nodes is connected to at least one of the plurality of edge nodes. The plurality of spine network nodes is assigned an autonomous system number information, and each one of the plurality of leaf network nodes is likewise assigned a further autonomous system number information. The assignment of an autonomous system number information to leaf and spine nodes is a prerequisite to utilize eBGP as routing protocol in the data center underlay. After an eBGP session is established between the specific leaf network node and one of the plurality of spine network nodes, routing information is exchanged and the routing table of the specific leaf network node is populated. Through this process the specific network node is set up to participate in the routing of data packets through the fabric. It is thereby advantageously possible to automatically provision a new leaf node without centralized management by a control unit.

According to the present invention, in order to deploy a specific leaf network node out of the plurality of leaf network node, the method comprises the following steps:
-- in a first step, the specific leaf network node transmits a request message to a management local area network server node,
-- in a second step, subsequent to the first step, the specific leaf network node receives a response message from the management local area network server node,
-- in a third step, subsequent to the second step, the specific leaf network node activates a link interface towards at least one of the plurality of spine network nodes.

Thereby, it is advantageously possible to provide a mechanism for autoprovisiong of the data center fabric infrastructure and to realize an auto-setup of the data center underlay routing afterwards. In the context of the present invention, deployment of a leaf network node means installation of a new leaf network node or replacement of an existing leaf node, i.e. due to hardware failure. An installation of a new leaf network node typically takes place during the initial setup of the switching fabric or as new nodes are added to the fabric for capacity enhancement.

As the number of data center switches (or data center network nodes, i.e. spine and leaf switches or spine network nodes and leaf network nodes) can be rather huge - either because the data center itself is a large-scale data center or because there is a large number of data centers as it is the case in the context of typical broadband access networks, such as aggregation networks, a procedure to configure these switches (or network nodes) and setup the appropriate connectivity with minimal effort is required. According to the present invention the data center switches (or network nodes) retrieve a generic configuration template as well as a unique host identifier from a management local area network server node (typically a DHCP server) upon boot-up (of the network nodes). All the other pieces of information to setup the underlay of the data center (or the switching fabric) - i.e. a considered number of leaf network nodes and spine network nodes - are deterministically derived, for each of the considered network nodes, from those two pieces of information and the appropriate connections are automatically setup and configured. In this way it is advantageously possible to base all parameters necessary for configuring the leaf network node on a single information in the form of the unique host identifier. Preferably the specific leaf network node sends a request for such a unique host identifier, i.e. a unique node identification information, in the first step and receives the unique node identification information with the response message in the second step. Thereby the necessary information for configuring the leaf network node can advantageously be communicated by simple exchange of a minimal piece of information. It is further preferred that, as part of the autoconfiguration process, the specific leaf network node brings up a predefined link interface towards at least one of the plurality of spine network nodes. It is particularly preferred that the leaf network node brings up such predefined link interfaces to all spine network nodes.

According to the present invention, it is advantageously possible to provide a fabric architecture within the central office point of delivery, which supports Layer 2 based access systems in combination with LDP-based (Label Distribution Protocol) connectivity to remote nodes which are outside of the fabric (and hence outside of the central office point of delivery). This enables a flexible architecture by using basic MPLS (Multiprotocol Label Switching) features.

The telecommunications network according to the present invention might be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

Furthermore according to the present invention, in a fourth step, subsequent to the second step and prior to or during the third step, the specific leaf network node determines
-- the autonomous system number information and/or
-- a IPv6 loopback internet protocol address
to be used by the specific leaf network node towards at least one of the plurality of spine network nodes.

By means of determining the autonomous system number information and/or the IPv6 loopback internet protocol address, it is advantageously possible to easily and effectively deploy the network nodes of the switching fabric. Preferably both, autonomous system number information and IPv6 loopback internet protocol address are derived from the unique node identification information via a predefined relationship. According to a possible embodiment of such a relationship, the autonomous system number is obtained from the node identification information by adding a base number, i.e. 65100 to the number of the node identification information (NID). Similarly, the IPv6 loopback internet protocol address is obtained by adding the number of the node identification information to a base address pattern, i.e. according to 2001:DB8::1:<NID>/132.

According to an alternative embodiment of the present invention, it is preferred that the management local area network server node is a dynamic host configuration protocol server node, wherein the management local area network server node especially provides the response message only towards network nodes having pre-registered media access control addresses.

Thereby, it is advantageously possible to provide for a robust and secure deployment of the data center or switching fabric.

According to the present invention, the autonomous system number information is determined, by the specific leaf network node, based on a unique node identification information, obtained, during the second step, from the management local area network server node, wherein the unique node identification information is especially of the type "leaf<node identification information>".

Thereby, it is advantageously possible to deploy the network nodes of the switching fabric effectively and comparatively easily.

According to further embodiments of the present invention, the IPv6 loopback internet protocol address is determined, by the specific leaf network node, based on a unique node identification information, especially obtained, during the second step, from the management local area network server node.

Furthermore, according to an embodiment of the present invention, the specific leaf network node uses, when activating - during the third step - the link interface towards at least one of the plurality of spine network nodes, an IPv6 unnumbered address, wherein especially the specific leaf network node sends IPv6 Neighbor Solicitation messages to the at least one of the plurality of spine network nodes, wherein especially the at least one of the plurality of spine network nodes responds with IPv6 Neighbor Advertisement messages.

Thereby, it is advantageously possible to easily and effectively implement the inventive method.

According to a further embodiment of the present invention, in order to deploy a specific spine network node out of the plurality of spine network nodes, the method comprises the following steps:
-- in a fifth step, the specific spine leaf network node transmits a further request message to the management local area network server node,
-- in a sixth step, subsequent to the fifth step, the specific spine network node receives a further response message from the management local area network server node.

Thereby, it is advantageously possible to provide a mechanism for autoprovisiong also with respect of the spine network nodes.

According to a further embodiment of the present invention, in a seventh step, subsequent to the sixth step, the specific spine network node determines
-- the further autonomous system number information and/or
-- a further IPv6 loopback internet protocol address
to be used by the specific spine network node.

Thereby, it is advantageously possible to easily and effectively implement the inventive method of autoprovisioning also for the spine network nodes.

According to still a further embodiment of the present invention, the further autonomous system number information is determined, by the specific spine network node, based on a further unique node identification information, especially obtained, during the sixth step, from the management local area network server node, wherein the further unique node identification information is especially of the type "spine<node identification information>".

Furthermore, the present invention relates to a telecommunications network according to claim 9.

Furthermore, the present invention relates to a switching fabric according to claim 10.

Additionally, the present invention relates to a system according to claim 11.

Still additionally, the present invention relates to a program according to claim 12.

Furthermore, the present invention relates to a computer program product according to claim 13.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

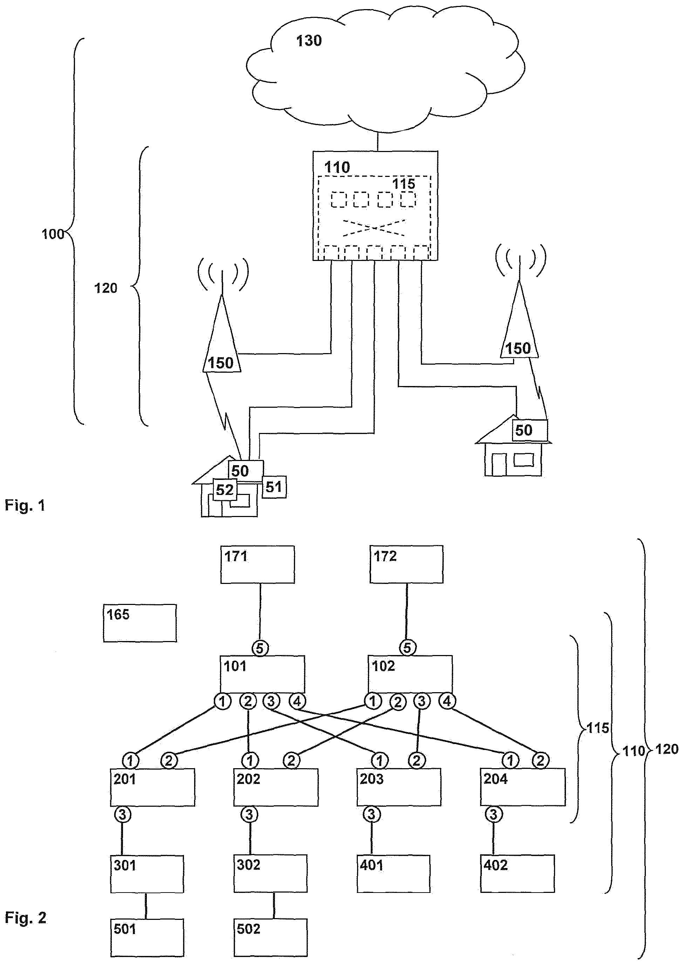

Figure 1 schematically illustrates a telecommunications network according to the present invention, having a fixed line part and a mobile (or cellular) part, and, hence, providing the possibility for user equipment or client devices to use different access technologies, wherein the telecommunications network comprises a broadband access network, and wherein a logical or physical central office point of delivery (being part of the broadband access network) is handling different access possibilities.

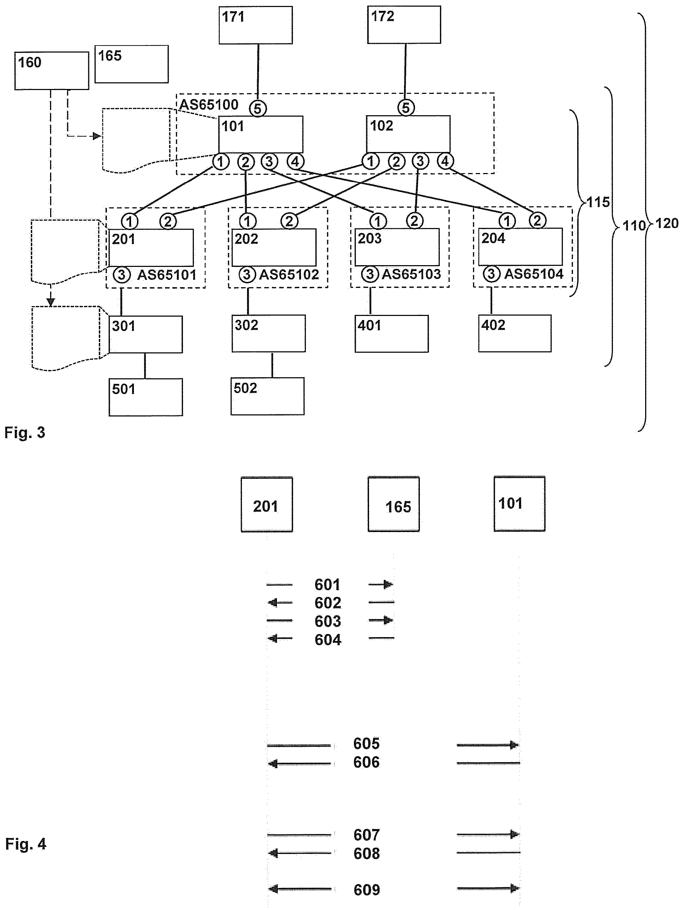

Figures 2 and 3 schematically illustrate a switching fabric as part of the telecommunications network, wherein the represented part of the telecommunications network comprises the switching fabric within a logical or physical central office point of delivery, which itself is part of the broadband access network of the telecommunications network.
Figure 4 schematically illustrates an example of a provisioning of a leaf network node within the switching fabric.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 according to the present invention is schematically shown, having - preferably - a fixed line part and a mobile (or cellular) part (schematically illustrated by means of base station entities 150). According to such a preferred embodiment of the telecommunications network 100 comprising a fixed line part and a mobile (or cellular) part, it is provided for the user equipment or client devices 51, 52 being able to use different access technologies. However, according to the present invention, also a telecommunications network 100 of the "fixed-line-only" type, or a telecommunications network 100 of the "mobile (or cellular)-only" type is possible to be used according to the present invention. The telecommunications network 100 comprises at least one logical or physical central office point of delivery 110 that is preferably realized within a data center and that is handling different access requirements, especially different access possibilities, of the client devices 51, 52 to network functionalities 190 provided by the telecommunications network 100 or via the telecommunications network 100. The client devices 51, 52 are typically connected to the logical or physical central office point of delivery 110 by means of a customer premises equipment device 50 or by means of a customer premises equipment functionality that might be built in the client devices 51, 52.

Figures 2 and 3 schematically illustrate a switching fabric as part of the telecommunications network 100, wherein the represented part of the telecommunications network 100 comprises the switching fabric 115 within a logical or physical central office point of delivery 110, which itself is part of the broadband access network 120 of the telecommunications network 100.

In other applications of the present invention, the switching fabric 115 and its network nodes might be part of a data center (not shown in the Figures) or a data center might comprise a plurality of such switching fabrics 115.

Independent from the different possible applications, the switching fabric 115 comprises a plurality of spine network nodes 101, 102. In the example represented in Figures 2 and 3, the switching fabric 115 comprises two spine network nodes, a first spine network node 101 and a second spine network node 102. Furthermore, the switching fabric 115 comprises a plurality of leaf network nodes 201, 202, 203, 204. In the example represented in Figures 2 and 3, the switching fabric 115 comprises four leaf network nodes, a first leaf network node 201, a second leaf network node 202, a third leaf network node 203, and a fourth leaf network node 204. Within the switching fabric 115 each one of the plurality of spine network nodes 101, 102 is connected with each one of the plurality of leaf network nodes 201, 202, 203, 204.

In case of the switching fabric 115 being part of a broadband access network 120, the network nodes of the switching fabric 115 are typically connected to plurality of (label) edge nodes 171, 172, two of which are represented in Figures 2 and 3. The spine network nodes 101, 102 are each connected to one of the (label) edge nodes 171, 172; in the example provided in Figures 2 and 3, there is a 1:1 relationship between each one of the spine network nodes 101, 102 on the one hand and each one of the (label) edge nodes 171, 172. However, according to the present invention, such a 1:1 relationship is not mandatory: It is preferred according to the present invention to realize the broadband access network such that a group or a plurality of at least two spine network nodes and a group or a plurality of at least two (label) edge nodes are related or assigned to each other, but that the effective connection between a specific spine network node (of the considered group of spine network nodes) and a specific (label) edge node (of the considered group of (label) edge nodes) is dependent on the required transmission capacity in different load conditions of the network.

In the example shown in Figures 2 and 3, the central office point of delivery 110 furthermore comprises a plurality of line termination nodes 301, 302, and/or a plurality of service edge nodes 401, 402. In the example represented in Figures 2 and 3, the central office point of delivery 110 comprises two line termination nodes, a first line termination node 301 and a second line termination node 302, and two service edge nodes, such as, e.g. BNG (Broadband Network Gateway nodes), a first service edge node 401, and a second service edge node 402. Furthermore, the broadband access network 120 comprises a plurality of remote access nodes 501, 502 such that each one of the plurality of line termination nodes 301, 302 is connected to at least one of the plurality of remote access nodes 501, 502. In the example represented in Figures 2 and 3, the broadband access network 120 comprises two remote access nodes, a first remote access node 501, and a second remote access node 502.

The spine network nodes 101, 102 each comprise a certain number of interfaces or ports; in the example represented in Figures 2 and 3, each one of the spine network nodes 101, 102 comprises five interfaces or ports, being numbered from 1 to 5 in Figures 2 and 3 at each one of the spine network nodes 101, 102; for each spine network node 101, 102, ports 1 to 4 provide a connection to one of the leaf network nodes, i.e. port 1 (respectively of the first or the second spine network node 101, 102) provides the connection to the first line termination node 301, port 2 provides the connection to the second line termination node 302, etc.; for each spine network node 101, 102, port 5 (respectively of the first or the second spine network node 101, 102) provides a connection to one of the (label) edge nodes 171, 172.

Likewise, the leaf network node 201, 202, 203, 204 each comprise a certain number of interfaces or ports; in the example represented in Figures 2 and 3, each one of the leaf network node 201, 202, 203, 204 comprises three interfaces or ports, being numbered from 1 to 3 in Figures 2 and 3 at each one of the leaf network node 201, 202, 203, 204; for each leaf network node 201, 202, 203, 204 ports 1 and 2 provide a connection to one of the spine network nodes, i.e. port 1 (respectively of the first, second, third or fourth leaf network node 201, 202, 203, 204) provides the connection to the first spine network node 101, port 2 provides the connection to the second spine network node 102; for each leaf network node 201, 202, 203, 204, port 3 (respectively of the first or the second or the third or the fourth leaf network node 201, 202, 203, 204) provides a connection to one of the line termination node 301, 302, and to one of service edge nodes 401, 402.

According to the present invention, an improved deployment and use of network nodes 101, 102, 201, 202, 203, 204 of a data center or of a switching fabric 115 of a data center or within a central office point of delivery 110 is provided. Each one of the plurality of leaf network nodes 201, 202, 203, 204 is assigned an autonomous system number information, and the plurality of spine network nodes 101, 102 is assigned an autonomous system number information.

According to the present invention, in order to deploy a specific leaf network node 201 out of the plurality of leaf network node, the method comprises the following steps:
-- in a first step, the specific leaf network node transmits a request message to a management local area network server node,
-- in a second step, subsequent to the first step, the specific leaf network node receives a response message from the management local area network server node,
-- in a third step, subsequent to the second step, the specific leaf network node activates a link interface towards at least one of the plurality of spine network nodes.

Figure 4 schematically illustrates an example of a provisioning of a leaf network node 201 within the switching fabric 110, i.e. the process of autodiscovery and the auto-setup mechanism according to the present invention. The inventive use of the process of autodiscovery of network nodes (of the switch fabric) and the auto-setup mechanism according to the present invention, is able to be applied to switching fabrics 115 being located within telecommunications networks 100, especially within broadband access networks 120, as well as, more generally, to switching fabrics in data centers. In the scenario of an integration of the switching fabric 115 in, e.g., a broadband access network 120, the data center fabric uses MPLS segment routing to forward packets across the fabric and to allow MPLS-based data center overlay, e.g. EVPN or BGP L3VPN. However, in case of the switching fabric being used as part of a data center, the methods and mechanism of the present invention can also be used for IP-only switching fabrics 115. More details can be found in draft-ietf-spring-segment-routing-10.

Regardless of the application of the switching fabric 115 considered, within the switching fabric 115 the eBGP (external Border Gateway Protocol) is used as a single protocol to discover the fabric topology and distribute the routing information for the fabric underlay, i.e. the network nodes of the switching fabric 115. The switching fabric 115 consists of spine switches 101, 102 (or spine network nodes) and leaf switches 201, 202, 203, 204 (or leaf network nodes). The leaf switches (or leaf network nodes 201, 202, 203, 204) are redundantly connected to spine switches (or spine network nodes 101, 102). According to the present invention, the spine layer represents a single autonomous system while each leaf switch also presents a single autonomous system.

The general concept is based on RFC7938. In this framework, the eBGP is used as a single protocol to discover the fabric topology and distribute the routing information for the fabric underlay. The fabric consists of spine switches and leaf switches. The leaf switches are redundantly connected to spine switches. The spine layer represents a single AS while each leaf switch also presents a single AS; this is represented in Figure 3 by means of dashed boxes around the spine network nodes 101, 102 and the indication "AS65100", and by means of dashed boxes around each of the plurality of leaf network nodes 201, 202, 203, 204 and the indications "AS65101", "AS65102", "AS65103", and "AS65104".

Figure 4 schematically shows the process of autodiscovery and the auto-setup mechanism according to the present invention for a specific leaf network node 201 of the plurality of leaf network nodes 201, 202, 203, 204, and with respect to a specific spine network node 101 of the plurality of spine network nodes 101, 102, using a management local area network server node 165. Thereby, it is advantageously possible according to the present invention that the configuration of the switches (or network nodes within the switching fabric 115) and the setup of such eBGP sessions is simplified as well as complex IP address management avoided.

Initially, a leaf switch (or leaf network node) 201 is installed and physical connectivity between the new leaf switch and the spine layer of the switching fabric 115 is provided. In addition, the leaf switch (or leaf network node) 201 is connected to a management local area network. Afterwards the leaf switch (or leaf network node) 201 is booted, especially with a network operating system (or an operating system provided by the network, especially via the management local area network, i.e. the management local area network server node 165).

Upon or after boot-up, the leaf switch (or leaf network node) 201 sends out one request or a plurality of requests, especially a DHCP (Dynamic Host Configuration Protocol) request or a plurality thereof, on the management local area network (i.e. from the management local area network server node 165), in order to learn a management internet protocol address (either IPv4 or IPv6) as well as its hostname, which especially has the format "leaf<NID>", where <NID> represents a unique node identification information. Especially, and as represented in Figure 4, In a first processing step 601, a DHCP Discover message (or request) is sent from the specific leaf network node 201 to the management local area network server node 165. In a second processing step 602, a DHCP Offer message (or answer) is received by the specific leaf network node 201 from the management local area network server node 165. In a third processing step 603, a DHCP Request message is sent from the specific leaf network node 201 to the management local area network server node 165. In a fourth processing step 604, a DHCP Acknowledge message (or answer) is received by the specific leaf network node 201 from the management local area network server node 165. By means of these four processing steps, the first and second step of the inventive method (i.e. the specific leaf network node 201 transmits a request message to the management local area network server node 165, and the specific leaf network node 201 receives a response message from the management local area network server node 165) are realized.

Based on the node identification information (NID), the specific leaf network node 201 is able to calculate its own unique autonomous system number (ASN) information, e.g. the autonomous system number corresponds to the Addition result of the number 65100 and the number of the node identification information (NID) (i.e. ASN = 65100 + <NID>). Additionally, the specific leaf network node 201 is able to calculate a unique loopback IPv6 address, e.g. LoopIPv6Addr=2001:DB8::1:<NID>/132.

The specific leaf network node 201 activates the uplinks to the spine switches (i.e. to the specific spine network node 101) and uses IPv6 unnumbered addresses. This corresponds to the third step according to the method according to the present invention.

Upon activation of the uplink interfaces, the leaf switch (i.e. the specific leaf network node 201) sends IPv6 Neighbor Solicitation messages (in a fifth processing step 605) to the spine switch (i.e. the specific spine network node 101) which responds with IPv6 Neighbor Advertisement messages (in a sixth processing step 606).

Thereafter, the leaf switch (i.e. the specific leaf network node 201) extracts the link local IPv6 address of the spine switch (i.e. the specific spine network node 101) from the IPv6 neighbor Advertisement.

In a seventh processing step 607, the leaf switch (i.e. the specific leaf network node 201) initiates an eBGP session (by means of a BGP OPEN message) with the spine switch (i.e. the specific spine network node 101) using the spine's link local IPv6 address as peer address; and in an eighth processing step 608, the specific spine network node 101 provides an answer by means of a corresponding message (BGP OPEN). The spine switches will always use the same further autonomous system number or further autonomous system number information, such as, e.g., "65100". After the BGP session has been established, BGP routing updates are exchanged (in a ninth processing step 609) between the network nodes considered.

It is especially advantageous according to the present invention, to use a pre-shared key to secure the BGP session. Alternatively or cumulatively, it is furthermore advantageously possible according to the present invention that for the sake of security, the management local area network server node 165 provides information (such as the node identification information in the first to the fourth processing steps, i.e. in the first and second step of the inventive method) only for pre-registered MAC (Medium Access Control) addresses (of the concerned network nodes).

For the autodiscovery and/or autoconfiguration of spine switches (i.e. spine network nodes 101, 102), a slightly different procedure (from the one used for leaf switches) is applied according to the present invention:
The hostname (of the spine network node 101) has the format "spine<ID>". The ASN, i.e. the further autonomous system number information is preferably identical for all spine network nodes of a considered switching fabric, e.g. it always corresponds to 651000 and the LooplPv6Addr corresponds to "2001:DB8::<ID>/132" in order to avoid conflicts.

Additionally, it is preferred according to the present invention that the spine switches do not initiate eBGP sessions themselves but accept all incoming eBGP sessions to its link local IPv6 addresses if the peer autonomous system (i.e. one of the leaf network nodes 201, 202, 203, 204) is within a pre-defined range of autonomous system number information, e.g. 65101-65120, and the shared secret matches.

The eBGP protocol uses multiprotocol extensions to distribute node labeled IPv6 segment routing IDs (SIDs) for each node in the fabric. The extensions are described in draft-ietf-idr-bgp-prefix-sid-03. Each switch announces exactly one prefix SID for its loopback address. These segment routing labels are used for transport purposes only and are allocated from a pre-defined range.

## Claims

1. Method for an improved deployment and use of network nodes of a switching fabric (115) of a data center or within a central office point of delivery (110) of a broadband access network (120) of a telecommunications network (100),
wherein the switching fabric (115) comprises a plurality of spine network nodes (101, 102) and a plurality of leaf network nodes (201, 202, 203, 204),
wherein - within the switching fabric (115) considered - each one of the plurality of spine network nodes (101, 102) is connected with each one of the plurality of leaf network nodes (201, 202, 203, 204),
wherein each one of the plurality of leaf network nodes (201, 202, 203, 204) is assigned an autonomous system number information, and wherein the plurality of spine network nodes (101, 102) is assigned a further autonomous system number information,
wherein in order to deploy a specific leaf network node (201) out of the plurality of leaf network node (201, 202, 203, 204), the method comprises the following steps:
-- in a first step, the specific leaf network node (201) transmits a request message to a management local area network server node (165),
-- in a second step, subsequent to the first step, the specific leaf network node (201) receives a response message from the management local area network server node (165),
-- in a third step, subsequent to the second step, the specific leaf network node (201) activates a link interface towards at least one of the plurality of spine network nodes (101, 102)
wherein in a fourth step, subsequent to the second step and prior to or during the third step, the specific leaf network node (201) determines
-- the autonomous system number information and/or
-- a IPv6 loopback internet protocol address
to be used by the specific leaf network node (201) towards at least one of the plurality of spine network nodes (101, 102),
wherein the autonomous system number information is determined, by the specific leaf network node (201), based on a unique node identification information, obtained, during the second step, from the management local area network server node (165).

2. Method according to claim 1, wherein the management local area network server node (165) is a dynamic host configuration protocol server node, wherein the management local area network server node (165) especially provides the response message only towards network nodes having pre-registered media access control addresses.

3. Method according to one of the preceding claims, wherein the unique node identification information is of the type "leaf<node identification information>".

4. Method according to one of the preceding claims, wherein the IPv6 loopback internet protocol address is determined, by the specific leaf network node (201), based on a unique node identification information, especially obtained, during the second step, from the management local area network server node (165).

5. Method according to one of the preceding claims, wherein the specific leaf network node (201) uses, when activating - during the third step - the link interface towards at least one of the plurality of spine network nodes (101, 102), an IPv6 unnumbered address, wherein especially the specific leaf network node (201) sends IPv6 Neighbor Solicitation messages to the at least one of the plurality of spine network nodes (101, 102), wherein especially the at least one of the plurality of spine network nodes (101, 102) responds with IPv6 Neighbor Advertisement messages.

6. Method according to one of the preceding claims, wherein in order to deploy a specific spine network node (101) out of the plurality of spine network nodes (101, 102), the method comprises the following steps:
-- in a fifth step, the specific spine network node (101) transmits a further request message to the management local area network server node (165),
-- in a sixth step, subsequent to the fifth step, the specific spine network node (101) receives a further response message from the management local area network server node (165).

7. Method according to one of the preceding claims, wherein in a seventh step, subsequent to the sixth step, the specific spine network node (101) determines
-- the further autonomous system number information and/or
-- a further IPv6 loopback internet protocol address
to be used by the specific spine network node (101).

8. Method according to one of the preceding claims, wherein the further autonomous system number information is determined, by the specific spine network node (101), based on a further unique node identification information, especially obtained, during the sixth step, from the management local area network server node (165), wherein the further unique node identification information is especially of the type "spine<node identification information>".

9. Telecommunications network (100) for an improved deployment and use of network nodes of a switching fabric (115) of a data center or within a central office point of delivery (110) of a broadband access network (120) of the telecommunications network (100),
wherein the switching fabric (115) comprises a plurality of spine network nodes (101, 102) and a plurality of leaf network nodes (201, 202, 203, 204),
wherein - within the switching fabric (115) considered - each one of the plurality of spine network nodes (101, 102) is connected with each one of the plurality of leaf network nodes (201, 202, 203, 204),
wherein the telecommunications network (100) especially comprises a plurality of edge nodes (171, 172) such that each one of the plurality of spine network nodes (101, 102) is connected to at least one of the plurality of edge nodes (171, 172), wherein each one of the plurality of leaf network nodes (201, 202, 203, 204) is assigned an autonomous system number information, and wherein the plurality of spine network nodes (101, 102) is assigned a further autonomous system number information,
wherein in order to deploy a specific leaf network node (201) out of the plurality of leaf network node (201, 202, 203, 204), the telecommunications network (100) is configured such that:
-- the specific leaf network node (201) transmits a request message to a management local area network server node (165),
-- the specific leaf network node (201) receives a response message from the management local area network server node (165),
-- the specific leaf network node (201) activates a link interface towards at least one of the plurality of spine network nodes (101, 102),
-- the specific leaf network node (201) determines
-- the autonomous system number information and/or
-- a IPv6 loopback internet protocol address
to be used by the specific leaf network node (201) towards at least one of the plurality of spine network nodes (101, 102),
wherein the autonomous system number information is determined, by the specific leaf network node (201), based on a unique node identification information, obtained from the management local area network server node (165).

10. Switching fabric (115) of a data center or within a central office point of delivery (110) of a broadband access network (120) for an improved deployment and use of network nodes of the switching fabric (115),
wherein the switching fabric (115) comprises a plurality of spine network nodes (101, 102) and a plurality of leaf network nodes (201, 202, 203, 204),
wherein - within the switching fabric (115) considered - each one of the plurality of spine network nodes (101, 102) is connected with each one of the plurality of leaf network nodes (201, 202, 203, 204),
wherein each one of the plurality of leaf network nodes (201, 202, 203, 204) is assigned an autonomous system number information, and wherein the plurality of spine network nodes (101, 102) is assigned a further autonomous system number information,
wherein in order to deploy a specific leaf network node (201) out of the plurality of leaf network node (201, 202, 203, 204), the central office point of delivery (110) is configured such that:
-- the specific leaf network node (201) transmits a request message to a management local area network server node (165),
-- the specific leaf network node (201) receives a response message from the management local area network server node (165),
-- the specific leaf network node (201) activates a link interface towards at least one of the plurality of spine network nodes (101, 102),
-- the specific leaf network node (201) determines
-- the autonomous system number information and/or
-- a IPv6 loopback internet protocol address
to be used by the specific leaf network node (201) towards at least one of the plurality of spine network nodes (101, 102),
wherein the autonomous system number information is determined, by the specific leaf network node (201), based on a unique node identification information, obtained from the management local area network server node (165).

11. System for an improved deployment and use of network nodes of a switching fabric (115) of a data center or within a central office point of delivery (110) of a broadband access network (120), the system comprising a switching fabric (115), especially in a broadband access network (120),
wherein the switching fabric (115) comprises a plurality of spine network nodes (101, 102) and a plurality of leaf network nodes (201, 202, 203, 204),
wherein - within the switching fabric (115) considered - each one of the plurality of spine network nodes (101, 102) is connected with each one of the plurality of leaf network nodes (201, 202, 203, 204),
wherein the system especially comprises a plurality of edge nodes (171, 172) such that each one of the plurality of spine network nodes (101, 102) is connected to at least one of the plurality of edge nodes (171, 172),
wherein each one of the plurality of leaf network nodes (201, 202, 203, 204) is assigned an autonomous system number information, and wherein the plurality of spine network nodes (101, 102) is assigned a further autonomous system number information,
wherein in order to deploy a specific leaf network node (201) out of the plurality of leaf network nodes (201, 202, 203, 204), the system is configured such that:
-- the specific leaf network node (201) transmits a request message to a management local area network server node (165),
-- the specific leaf network node (201) receives a response message from the management local area network server node (165),
-- the specific leaf network node (201) activates a link interface towards at least one of the plurality of spine network nodes (101, 102),
-- the specific leaf network node (201) determines
-- the autonomous system number information and/or
-- a IPv6 loopback internet protocol address
to be used by the specific leaf network node (201) towards at least one of the plurality of spine network nodes (101, 102),
wherein the autonomous system number information is determined, by the specific leaf network node (201), based on a unique node identification information, obtained from the management local area network server node (165).

12. Program comprising a computer readable program code which, when executed on a computer and/or on a logical or physical central office point of delivery (110) and/or on a network node of a switching fabric (115) of a data center or within a central office point of delivery (110), or in part on a logical or physical central office point of delivery (110) and/or in part on a network node of a switching fabric (115) of a data center or within a central office point of delivery (110), causes the computer and/or the logical or physical central office point of delivery (110) and/or the network node of a switching fabric (115) of a data center or within a central office point of delivery (110) to perform a method according one of claims 1 to 8.

13. Computer program product for an improved deployment and use of network nodes of a switching fabric (115) of a data center or within a central office point of delivery (110) of a broadband access network (120) of the telecommunications network (100), the computer program product comprising a computer program stored on a storage medium, the computer program comprising program code which, when executed on a computer and/or on a logical or physical central office point of delivery (110) and/or on a network node of a switching fabric (115) of a data center or within a central office point of delivery (110), or in part on a logical or physical central office point of delivery (110) and/or in part on a network node of a switching fabric (115) of a data center or within a central office point of delivery (110), causes the computer and/or the logical or physical central office point of delivery (110) and/or the network node of a switching fabric (115) of a data center or within a central office point of delivery (110) to perform a method according one of claims 1 to 8.

## Patentansprüche

1. Verfahren für einen verbesserten Einsatz und eine verbesserte Nutzung von Netzknoten eines Switching-Fabric (115) eines Daten-Centers oder innerhalb eines Vermittlungsstellen-Übergabepunktes (110) eines Breitbandzugangsnetzes (120) eines Telekommunikationsnetzes (100), wobei das Switching-Fabric (115) mehrere Spine-Netzknoten (101, 102) und mehrere Leaf-Netzknoten (201, 202, 203, 204) umfasst,
wobei - innerhalb des betrachteten Switching-Fabric (115)
- jeder der mehreren Spine-Netzknoten (101, 102) mit jedem der mehreren Leaf-Netzknoten (201, 202, 203, 204) verbunden ist,
wobei jedem der mehreren Leaf-Netzknoten (201, 202, 203, 204) eine Information über die Nummer eines autonomen Systems zugewiesen wird, und wobei den mehreren Spine-Netzknoten (101, 102) eine weitere Information über die Nummer eines autonomen Systems zugewiesen wird,
wobei, um einen spezifischen Leaf-Netzknoten (201) der mehreren Leaf-Netzknoten (201, 202, 203, 204) einzusetzen, das Verfahren die folgenden Schritte umfasst:
- in einem ersten Schritt sendet der spezifische Leaf-Netzknoten (201) eine Anforderungsnachricht an einen Management-Local-Area-Network-Serverknoten (165),
- in einem zweiten Schritt, im Anschluss an den ersten Schritt, empfängt der spezifische Leaf-Netzknoten (201) eine Antwortnachricht von dem Management-Local-Area-Network-Serverknoten (165),
- in einem dritten Schritt, im Anschluss an den zweiten Schritt, aktiviert der spezifische Leaf-Netzknoten (201) eine Link-Schnittstelle zu mindestens einem der mehreren Spine-Netzknoten (101, 102),
wobei der spezifische Leaf-Netzknoten (201) in einem vierten Schritt, im Anschluss an den zweiten Schritt und vor oder während dem dritten Schritt, bestimmt:
- die Information über die Nummer eines autonomen Systems und/oder
- eine IPv6-Loopback-Internetprotokolladresse,
die der spezifische Leaf-Netzknoten (201) gegenüber mindestens einem der mehreren Spine-Netzknoten (101, 102) zu verwenden hat,
wobei die Information über die Nummer eines autonomen Systems durch den spezifischen Leaf-Netzknoten (201) auf der Grundlage einer eindeutigen Knotenidentifikationsinformation bestimmt wird, die während des zweiten Schrittes von dem Management-Local-Area-Network-Serverknoten (165) erhalten wird.

2. Verfahren nach Anspruch 1, wobei der Management-Local-Area-Network-Serverknoten (165) ein Dynamic Host Configuration Protocol-Serverknoten ist, wobei der Management-Local-Area-Network-Serverknoten (165) insbesondere die Antwortnachricht nur an Netzknoten mit vorregistrierten Media Access Control-Adressen versendet.

3. Verfahren nach einem der vorangehenden Ansprüche, wobei die eindeutige Knotenidentifikationsinformation vom Typ "leaf<node identification information>" ist.

4. Verfahren nach einem der vorangehenden Ansprüche, wobei die IPv6-Loopback-Internetprotokolladresse durch den spezifischen Leaf-Netzknoten (201) auf der Grundlage einer eindeutigen Knotenidentifikationsinformation bestimmt wird, die insbesondere während des zweiten Schrittes von dem Management-Local-Area-Network-Serverknoten (165) erhalten wird.

5. Verfahren nach einem der vorangehenden Ansprüche, wobei der spezifische Leaf-Netzknoten (201) bei der Aktivierung - während des dritten Schrittes - der Link-Schnittstelle zu mindestens einem den mehreren Spine-Netzknoten (101, 102) eine nicht-nummerierte IPv6-Adresse verwendet, wobei insbesondere der spezifische Leaf-Netzknoten (201) IPv6 Neighbor Solicitation-Nachrichten an den mindestens einen den mehreren Spine-Netzknoten (101, 102) sendet, wobei insbesondere der mindestens eine den mehreren Spine-Netzknoten (101, 102) mit IPv6 Neighbor Advertisement-Nachrichten antwortet.

6. Verfahren nach einem der vorangehenden Ansprüche, wobei, um einen spezifischen Spine-Netzknoten (101) der mehreren Spine-Netzknoten (101, 102) einzusetzen, das Verfahren die folgenden Schritte umfasst:
- in einem fünften Schritt sendet der spezifische Spine-Netzknoten (101) eine weitere Anforderungsnachricht an den Management-Local-Area-Network-Serverknoten (165),
- in einem sechsten Schritt, im Anschluss an den fünften Schritt, empfängt der spezifische Spine-Netzknoten (101) eine weitere Antwortnachricht von dem Management-Local-Area-Network-Serverknoten (165).

7. Verfahren nach einem der vorangehenden Ansprüche, wobei in einem siebten Schritt - im Anschluss an den sechsten Schritt
- der spezifische Spine-Netzknoten (101) bestimmt:
- die weitere Information über die Nummer eines autonomen Systems und/oder
- eine weitere IPv6-Loopback-Internetprotokolladresse, die der spezifische Spine-Netzknoten (101) zu verwenden hat.

8. Verfahren nach einem der vorangehenden Ansprüche, wobei die weitere Information über die Nummer eines autonomen Systems durch den spezifischen Spine-Netzknoten (101) auf der Grundlage einer weiteren eindeutigen Knotenidentifikationsinformation bestimmt wird, die insbesondere während des sechsten Schrittes von dem Management-Local-Area-Network-Server-Knoten (165) erhalten wird, wobei die weitere eindeutige Knotenidentifikationsinformation insbesondere vom Typ "spine<node identification information>" ist.

9. Telekommunikationsnetz (100) für einen verbesserten Einsatz und eine verbesserte Nutzung von Netzknoten eines Switching-Fabric (115) eines Daten-Centers oder innerhalb eines Vermittlungsstellen-Übergabepunktes (110) eines Breitbandzugangsnetzes (120) des Telekommunikationsnetzes (100),
wobei das Switching-Fabric (115) mehrere Spine-Netzwerkknoten (101, 102) und mehrere Leaf-Netzwerkknoten (201, 202, 203, 204) umfasst,
wobei - innerhalb des betrachteten Switching-Fabric (115)
- jeder der mehreren Spine-Netzknoten (101, 102) mit jedem der mehreren Leaf-Netzknoten (201, 202, 203, 204) verbunden ist,
wobei das Telekommunikationsnetz (100) insbesondere mehrere Randknoten (171, 172) umfasst, dergestalt, dass jeder der mehreren Spine-Netzknoten (101, 102) mit mindestens einem der mehreren Randknoten (171, 172) verbunden ist,
wobei jedem der mehreren Leaf-Netzknoten (201, 202, 203, 204) eine Information über die Nummer eines autonomen Systems zugewiesen wird, und wobei den mehreren Spine-Netzknoten (101, 102) eine weitere Information über die Nummer eines autonomen Systems zugewiesen wird,
wobei, um einen spezifischen Leaf-Netzknoten (201) der mehreren Leaf-Netzknoten (201, 202, 203, 204) einzusetzen, das Telekommunikationsnetz (100) so konfiguriert ist, dass:
- der spezifische Leaf-Netzknoten (201) eine Anforderungsnachricht an einen Management-Local-Area-Network-Serverknoten (165) sendet,
- der spezifische Leaf-Netzknoten (201) eine Antwortnachricht von dem Management-Local-Area-Network-Serverknoten (165) empfängt,
- der spezifische Leaf-Netzknoten (201) eine Link-Schnittstelle zu mindestens einem der mehreren Spine-Netzknoten (101, 102) aktiviert,
- der spezifische Leaf-Netzknoten (201) bestimmt:
- die Information über die Nummer eines autonomen Systems und/oder
- eine IPv6-Loopback-Internetprotokolladresse,
die der spezifische Leaf-Netzknoten (201) gegenüber mindestens einem der mehreren Spine-Netzknoten (101, 102) zu verwenden hat,
wobei die Information über die Nummer eines autonomen Systems durch den spezifischen Leaf-Netzknoten (201) auf der Grundlage einer eindeutigen Knotenidentifikationsinformation bestimmt wird, die von dem Management-Local-Area-Network-Serverknoten (165) erhalten wird.

10. Switching-Fabric (115) eines Daten-Centers oder innerhalb eines Vermittlungsstellen-Übergabepunktes (110) eines Breitbandzugangsnetzes (120) für einen verbesserten Einsatz und eine verbesserte Nutzung von Netzknoten des Switching-Fabric (115),
wobei das Switching-Fabric (115) mehrere Spine-Netzwerkknoten (101, 102) und mehrere Leaf-Netzwerkknoten (201, 202, 203, 204) umfasst,
wobei - innerhalb des betrachteten Switching-Fabric (115)
- jeder der mehreren Spine-Netzknoten (101, 102) mit jedem der mehreren Leaf-Netzknoten (201, 202, 203, 204) verbunden ist,
wobei jedem der mehreren Leaf-Netzknoten (201, 202, 203, 204) eine Information über die Nummer eines autonomen Systems zugewiesen wird, und wobei den mehreren Spine-Netzknoten (101, 102) eine weitere Information über die Nummer eines autonomen Systems zugewiesen wird,
wobei, um einen spezifischen Leaf-Netzknoten (201) der mehreren Leaf-Netzknoten (201, 202, 203, 204) einzusetzen, der Vermittlungsstellen-Übergabepunkt (110) so konfiguriert ist, dass:
- der spezifische Leaf-Netzknoten (201) eine Anforderungsnachricht an einen Management-Local-Area-Network-Serverknoten (165) sendet,
- der spezifische Leaf-Netzknoten (201) eine Antwortnachricht von dem Management-Local-Area-Network-Serverknoten (165) empfängt,
- der spezifische Leaf-Netzknoten (201) eine Link-Schnittstelle zu mindestens einem der mehreren Spine-Netzknoten (101, 102) aktiviert,
- der spezifische Leaf-Netzknoten (201) bestimmt:
- die Information über die Nummer eines autonomen Systems und/oder
- eine IPv6-Loopback-Internetprotokolladresse, die der spezifische Leaf-Netzknoten (201) gegenüber mindestens einem der mehreren Spine-Netzknoten (101, 102) zu verwenden hat,
wobei die Information über die Nummer eines autonomen Systems durch den spezifischen Leaf-Netzknoten (201) auf der Grundlage einer eindeutigen Knotenidentifikationsinformation bestimmt wird, die von dem Management-Local-Area-Network-Serverknoten (165) erhalten wird.

11. System für einen verbesserten Einsatz und eine verbesserte Nutzung von Netzknoten eines Switching-Fabric (115) eines Daten-Centers oder innerhalb eines Vermittlungsstellen-Übergabepunktes (110) eines Breitbandzugangsnetzes (120) (100),
wobei das Switching-Fabric (115) mehrere Spine-Netzwerkknoten (101, 102) und mehrere Leaf-Netzwerkknoten (201, 202, 203, 204) umfasst,
wobei - innerhalb des betrachteten Switching-Fabric (115)
- jeder der mehreren Spine-Netzknoten (101, 102) mit jedem der mehreren Leaf-Netzknoten (201, 202, 203, 204) verbunden ist,
wobei das System insbesondere mehrere Randknoten (171, 172) umfasst, dergestalt, dass jeder der mehreren Spine-Netzknoten (101, 102) mit mindestens einem der mehreren Randknoten (171, 172) verbunden ist,
wobei jedem der mehreren Leaf-Netzknoten (201, 202, 203, 204) eine Information über die Nummer eines autonomen Systems zugewiesen wird, und wobei den mehreren Spine-Netzknoten (101, 102) eine weitere Information über die Nummer eines autonomen Systems zugewiesen wird,
wobei, um einen spezifischen Leaf-Netzknoten (201) der mehreren Leaf-Netzknoten (201, 202, 203, 204) einzusetzen, das System so konfiguriert ist, dass:
- der spezifische Leaf-Netzknoten (201) eine Anforderungsnachricht an einen Management-Local-Area-Network-Serverknoten (165) sendet,
- der spezifische Leaf-Netzknoten (201) eine Antwortnachricht von dem Management-Local-Area-Network-Serverknoten (165) empfängt,
- der spezifische Leaf-Netzknoten (201) eine Link-Schnittstelle zu mindestens einem der mehreren Spine-Netzknoten (101, 102) aktiviert,
- der spezifische Leaf-Netzknoten (201) bestimmt:
- die Information über die Nummer eines autonomen Systems und/oder
- eine IPv6-Loopback-Internetprotokolladresse, die der spezifische Leaf-Netzknoten (201) gegenüber mindestens einem der mehreren Spine-Netzknoten (101, 102) zu verwenden hat,
wobei die Information über die Nummer eines autonomen Systems durch den spezifischen Leaf-Netzknoten (201) auf der Grundlage einer eindeutigen Knotenidentifikationsinformation bestimmt wird, die von dem Management-Local-Area-Network-Serverknoten (165) erhalten wird.

12. Programm, umfassend einen computerlesbaren Programmcode, der, wenn er auf einem Computer und/oder in einem logischen oder physischen Vermittlungsstellen-Übergabepunkt (110) und/oder in einem Netzknoten eines Switching-Fabric (115) eines Daten-Centers oder innerhalb eines Vermittlungsstellen-Übergabepunktes (110) oder teilweise in einem logischen oder physischen Vermittlungsstellen-Übergabepunkt (110) und/oder teilweise in einem Netzknoten eines Switching-Fabric (115) eines Daten-Centers oder innerhalb eines Vermittlungsstellen-Übergabepunktes (110) ausgeführt wird, den Computer und/oder den logischen oder physischen Vermittlungsstellen-Übergabepunkt (110) und/oder den Netzknoten eines Switching-Fabric (115) eines Daten-Centers oder innerhalb eines Vermittlungsstellen-Übergabepunktes (110) veranlasst, ein Verfahren nach einem der Ansprüche 1 bis 8 durchzuführen.

13. Computerprogrammprodukt für einen verbesserten Einsatz und eine verbesserte Nutzung von Netzknoten eines Switching-Fabric (115) eines Daten-Centers oder innerhalb eines Vermittlungsstellen-Übergabepunktes (110) eines Breitbandzugangsnetzes (120) des Telekommunikationsnetzes (100), wobei das Computerprogrammprodukt ein auf einem Speichermedium gespeichertes Computerprogramm umfasst, wobei das Computerprogramm Programmcode umfasst, der, wenn er auf einem Computer und/oder in einem logischen oder physischen Vermittlungsstellen-Übergabepunkt (110) und/oder in einem Netzknoten eines Switching-Fabric (115) eines Daten-Centers oder innerhalb eines Vermittlungsstellen-Übergabepunktes (110) oder teilweise in einem logischen oder physischen Vermittlungsstellen-Übergabepunkt (110) und/oder teilweise in einem Netzknoten eines Switching-Fabric (115) eines Daten-Centers oder innerhalb eines Vermittlungsstellen-Übergabepunktes (110) ausgeführt wird, den Computer und/oder den logischen oder physischen Vermittlungsstellen-Übergabepunkt (110) und/oder den Netzknoten eines Switching-Fabric (115) eines Daten-Centers oder innerhalb eines Vermittlungsstellen-Übergabepunktes (110) veranlasst, ein Verfahren nach einem der Ansprüche 1 bis 8 durchzuführen.

## Revendications

1. Procédé permettant un déploiement et une utilisation améliorés de nœuds de réseau d'une matrice de commutation (115) d'un centre de données ou à l'intérieur d'un point de livraison de centre de commutation (110) d'un réseau d'accès à large bande (120) d'un réseau de télécommunications (100), dans lequel la matrice de commutation (115) comprend une pluralité de nœuds de réseau troncs (101, 102) et une pluralité de nœuds de réseau feuilles (201, 202, 203, 204),
dans lequel - à l'intérieur de la matrice de commutation (115) considérée - chaque nœud de la pluralité de nœuds de réseau troncs (101, 102) est connecté à chaque nœud de la pluralité de nœuds de réseau feuilles (201, 202, 203, 204),
dans lequel une information de numéro de système autonome est attribuée à chaque nœud de la pluralité de nœuds de réseau feuilles (201, 202, 203, 204), et dans lequel une autre information de numéro de système autonome est attribuée à la pluralité de nœuds de réseau troncs (101, 102),
dans lequel, afin de déployer un nœud de réseau feuille spécifique (201) parmi la pluralité de nœuds de réseau feuilles (201, 202, 203, 204), le procédé comprend les étapes suivantes :
- dans une première étape, le nœud de réseau feuille spécifique (201) transmet un message de demande à un nœud serveur de réseau local de gestion (165),
- dans une deuxième étape, postérieure à la première étape, le nœud de réseau feuille spécifique (201) reçoit un message de réponse du nœud serveur de réseau local de gestion (165),
- dans une troisième étape, postérieure à la deuxième étape, le nœud de réseau feuille spécifique (201) active une interface de liaison avec au moins un nœud de la pluralité de nœuds de réseau troncs (101, 102), dans lequel, dans une quatrième étape, postérieure à la deuxième étape et exécutée avant ou pendant la troisième étape, le nœud de réseau feuille spécifique (201) détermine :
- l'information de numéro de système autonome et/ou
- une adresse de protocole Internet IPv6 de bouclage devant être utilisée(s) par le nœud de réseau feuille spécifique (201) vis-à-vis d'au moins un nœud de la pluralité de nœuds de réseau troncs (101, 102),
dans lequel l'information de numéro de système autonome est déterminée, par le nœud de réseau feuille spécifique (201), sur la base d'une information unique d'identification de nœud, obtenue, au cours de la deuxième étape, à partir du nœud serveur de réseau local de gestion (165).

2. Procédé selon la revendication 1, dans lequel le nœud serveur de réseau local de gestion (165) est un nœud serveur de protocole de configuration dynamique des hôtes, dans lequel le nœud serveur de réseau local de gestion (165) ne fournit en particulier le message de réponse qu'à destination de nœuds de réseau ayant des adresses préenregistrées de commande d'accès au support.

3. Procédé selon l'une des revendications précédentes, dans lequel l'information unique d'identification de nœud est du type « feuille<information d'identification de nœud> ».

4. Procédé selon l'une des revendications précédentes, dans lequel l'adresse de protocole Internet IPv6 de bouclage est déterminée, par le nœud de réseau feuille spécifique (201), sur la base d'une information unique d'identification de nœud, obtenue en particulier, au cours de la deuxième étape, à partir du nœud serveur de réseau local de gestion (165).

5. Procédé selon l'une des revendications précédentes, dans lequel le nœud de réseau feuille spécifique (201) utilise, lors de l'activation - au cours de la troisième étape - de l'interface de liaison avec au moins un nœud de la pluralité de nœuds de réseau troncs (101, 102), une adresse Ipv6 non numérotée, dans lequel, en particulier, le nœud de réseau feuille spécifique (201) envoie un message Ipv6 de sollicitation de voisin à l'au moins un nœud de la pluralité de nœuds de réseau troncs (101, 102), dans lequel, en particulier, l'au moins un nœud de la pluralité de nœuds de réseau troncs (101, 102) répond par un message IPv6 d'annonce de voisin.

6. Procédé selon l'une des revendications précédentes, dans lequel, afin de déployer un nœud de réseau tronc spécifique (101) parmi la pluralité de nœuds de réseau troncs (101, 102), le procédé comprend les étapes suivantes :
- dans une cinquième étape, le nœud de réseau tronc spécifique (101) transmet un message de demande supplémentaire au nœud serveur de réseau local de gestion (165),
- dans une sixième étape, postérieure à la cinquième étape, le nœud de réseau tronc spécifique (101) reçoit un message de réponse supplémentaire du nœud serveur de réseau local de gestion (165).

7. Procédé selon l'une des revendications précédentes, dans lequel, dans une septième étape, postérieure à la sixième étape, le nœud de réseau tronc spécifique (101) détermine :
- l'information supplémentaire de numéro de système autonome et/ou
- une adresse supplémentaire de protocole Internet IPv6 de bouclage
devant être utilisée(s) par le nœud de réseau tronc spécifique (101).

8. Procédé selon l'une des revendications précédentes, dans lequel l'information supplémentaire de numéro de système autonome est déterminée, par le nœud de réseau tronc spécifique (101), sur la base d'une information unique supplémentaire d'identification de nœud, obtenue en particulier, au cours de la sixième étape, à partir du nœud serveur de réseau local de gestion (165), dans lequel l'information unique supplémentaire d'identification de nœud est en particulier du type « tronc<information d'identification de nœud> ».

9. Réseau de télécommunications (100) permettant un déploiement et une utilisation améliorés de nœuds de réseau d'une matrice de commutation (115) d'un centre de données ou à l'intérieur d'un point de livraison de centre de commutation (110) d'un réseau d'accès à large bande (120) du réseau de télécommunications (100),
dans lequel la matrice de commutation (115) comprend une pluralité de nœuds de réseau troncs (101, 102) et une pluralité de nœuds de réseau feuilles (201, 202, 203, 204), dans lequel - à l'intérieur de la matrice de commutation (115) considérée - chaque nœud de la pluralité de nœuds de réseau troncs (101, 102) est connecté à chaque nœud de la pluralité de nœuds de réseau feuilles (201, 202, 203, 204),
dans lequel le réseau de télécommunications (100) comprend en particulier une pluralité de nœuds périphériques (171, 172), de telle sorte que chaque nœud de la pluralité de nœuds de réseau troncs (101, 102) soit connecté à au moins un nœud de la pluralité de nœuds périphériques (171, 172), dans lequel une information de numéro de système autonome est attribuée à chaque nœud de la pluralité de nœuds de réseau feuilles (201, 202, 203, 204), et dans lequel une autre information de numéro de système autonome est attribuée à la pluralité de nœuds de réseau troncs (101, 102),
dans lequel, afin de déployer un nœud de réseau feuille spécifique (201) parmi la pluralité de nœuds de réseau feuilles (201, 202, 203, 204), le réseau de télécommunications (100) est configuré de manière que :
- le nœud de réseau feuille spécifique (201) transmette un message de demande à un nœud serveur de réseau local de gestion (165),
- le nœud de réseau feuille spécifique (201) reçoive un message de réponse du nœud serveur de réseau local de gestion (165),
- le nœud de réseau feuille spécifique (201) active une interface de liaison avec au moins un nœud de la pluralité de nœuds de réseau troncs (101, 102),
- le nœud de réseau feuille spécifique (201) détermine :
- l'information de numéro de système autonome et/ou
- une adresse de protocole Internet IPv6 de bouclage devant être utilisée(s) par le nœud de réseau feuille spécifique (201) vis-à-vis d'au moins un nœud de la pluralité de nœuds de réseau troncs (101, 102),
dans lequel l'information de numéro de système autonome est déterminée, par le nœud de réseau feuille spécifique (201), sur la base d'une information unique d'identification de nœud, obtenue à partir du nœud serveur de réseau local de gestion (165).

10. Matrice de commutation (115) d'un centre de données ou à l'intérieur d'un point de livraison de centre de commutation (110) d'un réseau d'accès à large bande (120) permettant un déploiement et une utilisation améliorés de nœuds de réseau de la matrice de commutation (115),
dans laquelle la matrice de commutation (115) comprend une pluralité de nœuds de réseau troncs (101, 102) et une pluralité de nœuds de réseau feuilles (201, 202, 203, 204), dans laquelle - à l'intérieur de la matrice de commutation (115) considérée - chaque nœud de la pluralité de nœuds de réseau troncs (101, 102) est connecté à chaque nœud de la pluralité de nœuds de réseau feuilles (201, 202, 203, 204),
dans laquelle une information de numéro de système autonome est attribuée à chaque nœud de la pluralité de nœuds de réseau feuilles (201, 202, 203, 204), et dans laquelle une autre information de numéro de système autonome est attribuée à la pluralité de nœuds de réseau troncs (101, 102),
dans laquelle, afin de déployer un nœud de réseau feuille spécifique (201) parmi la pluralité de nœuds de réseau feuilles (201, 202, 203, 204), le point de livraison de centre de commutation (110) est configuré de manière que :
- le nœud de réseau feuille spécifique (201) transmette un message de demande à un nœud serveur de réseau local de gestion (165),
- le nœud de réseau feuille spécifique (201) reçoive un message de réponse du nœud serveur de réseau local de gestion (165),
- le nœud de réseau feuille spécifique (201) active une interface de liaison avec au moins un nœud de la pluralité de nœuds de réseau troncs (101, 102),
- le nœud de réseau feuille spécifique (201) détermine :
- l'information de numéro de système autonome et/ou
- une adresse de protocole Internet IPv6 de bouclage devant être utilisée(s) par le nœud de réseau feuille spécifique (201) vis-à-vis d'au moins un nœud de la pluralité de nœuds de réseau troncs (101, 102),
dans laquelle l'information de numéro de système autonome est déterminée, par le nœud de réseau feuille spécifique (201), sur la base d'une information unique d'identification de nœud, obtenue à partir du nœud serveur de réseau local de gestion (165).

11. Système permettant un déploiement et une utilisation améliorés de nœuds de réseau d'une matrice de commutation (115) d'un centre de données ou à l'intérieur d'un point de livraison de centre de commutation (110) d'un réseau d'accès à large bande (120), le système comprenant une matrice de commutation (115), en particulier dans un réseau d'accès à large bande (120),
dans lequel la matrice de commutation (115) comprend une pluralité de nœuds de réseau troncs (101, 102) et une pluralité de nœuds de réseau feuilles (201, 202, 203, 204), dans lequel - à l'intérieur de la matrice de commutation (115) considérée - chaque nœud de la pluralité de nœuds de réseau troncs (101, 102) est connecté à chaque nœud de la pluralité de nœuds de réseau feuilles (201, 202, 203, 204),
dans lequel le système comprend en particulier une pluralité de nœuds périphériques (171, 172), de telle sorte que chaque nœud de la pluralité de nœuds de réseau troncs (101, 102) soit connecté à au moins un nœud de la pluralité de nœuds périphériques (171, 172),
dans lequel une information de numéro de système autonome est attribuée à chaque nœud de la pluralité de nœuds de réseau feuilles (201, 202, 203, 204), et dans lequel une autre information de numéro de système autonome est attribuée à la pluralité de nœuds de réseau troncs (101, 102),
dans lequel, afin de déployer un nœud de réseau feuille spécifique (201) parmi la pluralité de nœuds de réseau feuilles (201, 202, 203, 204), le système est configuré de manière que :
- le nœud de réseau feuille spécifique (201) transmette un message de demande à un nœud serveur de réseau local de gestion (165),
- le nœud de réseau feuille spécifique (201) reçoive un message de réponse du nœud serveur de réseau local de gestion (165),
- le nœud de réseau feuille spécifique (201) active une interface de liaison avec au moins un nœud de la pluralité de nœuds de réseau troncs (101, 102),
- le nœud de réseau feuille spécifique (201) détermine :
- l'information de numéro de système autonome et/ou
- une adresse de protocole Internet IPv6 de bouclage devant être utilisée(s) par le nœud de réseau feuille spécifique (201) vis-à-vis d'au moins un nœud de la pluralité de nœuds de réseau troncs (101, 102),
dans lequel l'information de numéro de système autonome est déterminée, par le nœud de réseau feuille spécifique (201), sur la base d'une information unique d'identification de nœud, obtenue à partir du nœud serveur de réseau local de gestion (165).

12. Programme comprenant un code de programme lisible par ordinateur, qui, lorsqu'il est exécuté sur un ordinateur et/ou en un point de livraison de centre de commutation logique ou physique (110) et/ou sur un nœud de réseau d'une matrice de commutation (115) d'un centre de données ou à l'intérieur d'un point de livraison de centre de commutation (110), ou en partie en un point de livraison de centre de commutation logique ou physique (110) et/ou en partie sur un nœud de réseau d'une matrice de commutation (115) d'un centre de données ou à l'intérieur d'un point de livraison de centre de commutation (110), fait mettre en œuvre à l'ordinateur et/ou au point de livraison de centre de commutation logique ou physique (110) et/ou au nœud de réseau d'une matrice de commutation (115) d'un centre de données ou à l'intérieur d'un point de livraison de centre de commutation (110) un procédé selon l'une des revendications 1 à 8.

13. Produit-programme informatique permettant un déploiement et une utilisation améliorés de nœuds de réseau d'une matrice de commutation (115) d'un centre de données ou à l'intérieur d'un point de livraison de centre de commutation (110) d'un réseau d'accès à large bande (120) du réseau de télécommunications (100), le produit-programme informatique comprenant un programme informatique stocké sur un support de stockage, le programme informatique comprenant un code de programme qui, lorsqu'il est exécuté sur un ordinateur et/ou en un point de livraison de centre de commutation logique ou physique (110) et/ou sur un nœud de réseau d'une matrice de commutation (115) d'un centre de données ou à l'intérieur d'un point de livraison de centre de commutation (110), ou en partie en un point de livraison de centre de commutation logique ou physique (110) et/ou en partie sur un nœud de réseau d'une matrice de commutation (115) d'un centre de données ou à l'intérieur d'un point de livraison de centre de commutation (110), fait mettre en œuvre à l'ordinateur et/ou au point de livraison de centre de commutation logique ou physique (110) et/ou au nœud de réseau d'une matrice de commutation (115) d'un centre de données ou à l'intérieur d'un point de livraison de centre de commutation (110) un procédé selon l'une des revendications 1 à 8.
